(19) Europäisches Patentamt
European Patent Office
Office européen des brevets

(11) **EP 2 924 395 B1**

(12) **EUROPEAN PATENT SPECIFICATION**

(45) Date of publication and mention
of the grant of the patent:
**28.12.2016 Bulletin 2016/52**

(51) Int Cl.:
***G01D 4/00*** *(2006.01)*  ***H04Q 9/00*** *(2006.01)*
***G01D 21/00*** *(2006.01)*

(21) Application number: **14382100.7**

(22) Date of filing: **24.03.2014**

(54) **System and method for taking a passive measurement of a physical quantity wirelessly**

System und Verfahren zur Durchführung einer passiven drahtlosen Messung einer physikalischen Grösse

Système et procédé permettant de prendre une mesure passive d'une quantité physique sans fil

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**30.09.2015 Bulletin 2015/40**

(73) Proprietor: **Farsens, S.L.**
**20009 San Sebastián, Guipuzcoa (ES)**

(72) Inventors:
• **Zalbide Agirrezabalaga, Ibon**
**E-20009 San Sebastián - Guipúzcoa (ES)**
• **D'Entremont Jiménez, Eduardo**
**E-20009 San Sebastián - Guipúzcoa (ES)**
• **Redondo Farias, Iago José**
**E-20009 San Sebastián - Guipúzcoa (ES)**
• **Galarraga Martin, Iñaki**
**E-20009 San Sebastián - Guipúzcoa (ES)**
• **Jiménez Irastorza, Ainara**
**E-20009 San Sebastián - Guipúzcoa (ES)**
• **Berenguer Pérez, Roc**
**E-20009 San Sebastián - Guipúzcoa (ES)**

(74) Representative: **ABG Patentes, S.L.**
**Avenida de Burgos, 16D**
**Edificio Euromor**
**28036 Madrid (ES)**

(56) References cited:
**US-A1- 2011 043 339     US-A1- 2013 176 115**

**Description**

## TECHNICAL FIELD OF THE INVENTION

The invention is comprised in the field of sensor systems.

More specifically, the invention focuses on systems for measuring physical quantities using sensors, and particularly on the field of sensor systems with a passive RFID system, such that the passive RFID receiver is capable of obtaining the value of a sensor or transducer and transmitting said measurement wirelessly.

Passive measurement involves the system not requiring a power source connected to the power grid or batteries, being capable of extracting from the environment the energy it needs to operate, whereas the wireless feature means that both transmitting energy to the receiver and communicating data from the receiver to the emitter and vice versa, are performed without requiring wiring.

## STATE OF THE ART OF THE INVENTION

A sensor system consists of a sensor element, known as a transducer, and a reader system. The electromechanical properties of the transducer vary depending on the variable to which it is sensitive. The reader system conventionally consists of an electrical signal conditioning circuit, an acquisition system and a communication interface.

In turn, transducer reader systems require a power source in order to work. This power source can be a battery or a power grid outlet, or can be extracted from an environmental energy source. In turn, the supply systems can be classified in two groups: active systems and passive systems.

In the case of active systems, the energy is obtained from an energy source that independently generates energy, such as a battery, or from the power grid.

In the case of passive systems, it is necessary to extract energy from the environment in which the reader system is located.

Energy can be extracted from the environment from a controlled or non-controlled energy source. An example of non-controlled sources would be those that come from solar, wind or thermal energy; such sources have the drawback of not being able to assure system availability. In contrast, controlled sources, such as a radio frequency emitter (telephony, radio, television, RFID), can assure system availability. However, in these cases the regulations established by regulatory entities in terms of the energy emitted from the controlled source must be complied with. These regulations limit the maximum energy that can be emitted in a controlled manner, directly affecting the energy available in the device.

Examples of such energy harvesting sensor systems can e.g. be found in US 2013/0176115 A1 and US2011/0043339 A1.

In addition, an RFID (Radio Frequency IDentification) system is a remote data storage and retrieval system for an emitter retrieving the data stored in a receiver or tag wirelessly. Receivers or tags are also known as cards, transponders or RFID tags. The fundamental purpose of RFID technology is to transmit an object identity request from a reader (similar to a unique serial number) by means of radio waves to said receiver, or RFID tag. RFID tags contain antennas to allow receiving and responding to said requests by radio frequency. The following can be found among types of receivers or tags:

- passive tags, which do not need an additional power supply, and
- active tags, which require an additional power supply.

RFID systems can use different frequencies, but generally the most common frequencies are: low frequency or LF, high frequency or HF and ultra high frequency or UHF. Since radio waves act differently according to their frequency, the suitable band must be chosen according to the application in which the system is to be used. Therefore, segmentation in frequency of the systems according to each band of frequencies is the following:

- Low frequency (LF) RFID systems: these systems work at frequencies emitted in a range between 120 KHz and 150 KHz.
- High frequency (HF) RFID systems: these systems work at frequencies close to 13.56 MHz.
- Ultra high frequency (UHF) RFID systems: these systems work at frequencies comprised in a range between 860 and 960 MHz.

One way of taking measurements using a sensor system wirelessly is to incorporate a sensor system in the RFID receiver. Transducer reader systems require a power source in order to work, which represents a problem in passive RFID-type sensor measurement systems because they do not have a power supply and they have to manage the energy received from the RFID emitter. Taking into account that the energy extracted from said received signal must be enough to both take the measurement of the transducer and transmit the information wirelessly, the problems with these systems can be divided into three types:

- Energy extraction system: it must offer the largest amount of energy possible to the system, extracting the energy from a controlled source which regulation allows the highly efficient emission of high powers to maximize the operating distance of the system,

- Wireless communication system: it must be a low consumption system and have a rate of speed that is suitable for taking the amount of necessary measurements, and

- Measurement system: it must include transducer excitation, signal conditioning and measurement acquisition, complying with the demanding requirements

  • low consumption,
  • high resolution and precision in a measurement,
  • high measurement resolution and precision in the entire range of values that the transducer can have, and
  • compromise between measurement sensitivity and system operating distance (reading distance).

As will be seen below, the invention focuses on systems with guaranteed availability, so energy must be extracted from a controlled source.

In this sense, there are solutions in the state of the art that have tried to solve these problems with different degrees of success.

EP0496147A1 describes a method for taking precise measurements of resistors with a low nominal value. This method is capable of solving the requirement of taking a precise measurement, but it does not solve the problem of taking precise measurements in wireless systems in the entire operating range of a sensor.

The device Fluke CNX 3000 Wireless Digital Multimeter is a wireless multimeter that can measure impedances wirelessly. This device is capable of taking various measurements which can be sent wirelessly; however, said transmission of the measurements is done with the aid of power.

The wireless sensor TEMP-1022 of Wireless Sensors is a sensor that can transmit temperature measurements of a certain area wirelessly. However, sensor information is not obtained passively; and energy source, specifically an AA-type battery, is necessary for normal operation.

It is therefore desirable to find a solution that allows taking precise measurements in the entire operating range of a sensor wirelessly using a passive RFID system.

## BRIEF DESCRIPTION OF THE INVENTION

The system implemented in this invention solves the problems presented in the state of the art by providing a system for measuring a physical quantity wirelessly, with a emitter and a passive receiver according to claim 1, and a method for measuring a physical quantity wirelessly according to claim 10. Dependent claims define preferred embodiments of the invention.

Particularly, in a first aspect the invention relates to a system for measuring a physical quantity wirelessly, with an emitter and a passive receiver, comprising:

- on the emitter side, at least one RFID emitter, preferably emitting in the UHF band, with RF communication means for communicating with an RFID receiver,

- on the receiver side,

  • at least one passive RFID receiver module, preferably receiving in the UHF band, comprising,

    - at least one processing module,
    - at least one communication means for communicating with the RFID emitter, and
    - at least one means for extracting energy from the RF signal coming from the RFID emitter, providing a supply voltage (Vdd),
    - at least one information storage means, and
    - at least one logic operation means,

  • at least one energy storage means connected to and supplied by the at least one processing module,
  • at least one monitoring module of the energy stored in the at least one energy storage means,

- at least one microcontroller module, with analog-to-digital conversion (ADC) means, supplied and controlled by the at least one processing module,
- at least one measurement module comprising,

  - at least one sensing means supplied by the processing module, and
  - at least one measurement branch connected to the sensing means, said at least one measurement branch comprising at least one impedance and at least one switching means,

- at least one enabling module for enabling the microcontroller module, said at least one enabling module being controlled by the monitoring module,

wherein,

- the at least one monitoring module is adapted to maintain, by means of the at least one enabling module, the at least one measurement module without power until the at least one storage means reach a predetermined energy level ($\alpha$), and
- the at least one microcontroller module is adapted to

  a) enable at least one branch of the measurement branches through the switching means,
  b) take at least one measurement of the voltage drop in the enabled measurement branch through the analog-to-digital conversion (ADC) means and determine the voltage drop in the sensing means,
  c) determine if said at least one measurement of the voltage drop in the sensing means is greater than a threshold (U) of the value of the supply voltage (Vdd) of the at least one microcontroller module, in which case the value of the voltage drop is sent to the at least one information storage means of the at least one processing module,
  d) in the event that the voltage drop in the at least one sensing means is less than the threshold (U), disable the measurement branch and repeat a) to c), enabling the following branch until the voltage drop in the at least one sensing means is greater than a threshold (U) of the value of the supply voltage (Vdd).

The terms "sensor" and "transducer" are used interchangeably throughout this description of the invention and they have the same meaning as that discussed in the state of the art of the present document: a sensor and a transducer is a device which electromechanical properties vary depending on the physical quantity to which it is sensitive and for the purpose of quantifying said quantity. Specifically, said sensors can be of the resistive-, capacitive- or inductive-type sensors, varying their resistance, capacitance or inductance, respectively, depending on the physical quantity to be measured.

The system of the invention comprises a conventional RFID platform both on the emitter side and on the receiver side, the receiver part being responsible for extracting energy and wireless communication, which benefits being able to use the same antenna both for collecting energy and for wireless communications with the emitter.

The system also comprises energy storage means supplied by the processing module comprised in the receiver module, a monitoring module for monitoring the stored energy controlling the management of the energy stored in the energy storage means, a microcontroller module with analog-to-digital conversion means, controlled by a processing module of the RFID receiver module, an enabling module for enabling the microcontroller module controlled by the monitoring module, and a measurement module.

Said measurement module comprises at least one impedance connected in series to at least one switching means independently controlled by the at least one microcontroller module, both means, the at least one impedance and the at least one switching means, forming respective measurement branches connected in parallel to one another; and at least one sensing means supplied by the energy storage means and connected in series with the at least several impedances of the measurement branches.

The monitoring module is adapted to maintain, by means of the enabling module, the measurement module without power until the storage means reach a predetermined energy level, which benefits low energy consumption of the system.

Given that the consumption of excitation of the sensing means involves high consumption, the system of the invention, by means of the monitoring module, is adapted to take periodic measurements only when requested, i.e., during the measuring phase. Therefore, even though peak consumptions are relatively high while taking the measurement, it is possible to maintain mean consumption at values that are low enough to supply the measurement module with the energy stored in the energy storage modules without requiring any auxiliary energy source, and it therefore allows using passive-type receivers with the advantages it entails.

The element of the system capable of storing energy to support these periodic peak consumptions are said energy storage means.

Finally, in this first inventive aspect the system also comprises a microcontroller module adapted to

a) enable at least one branch of the measurement branches through the switching means,

b) take at least one measurement of the voltage drop in the enabled measurement branch through the analog-to-digital conversion means and determine the voltage drop in the sensing means,

c) determine if said measurement of the voltage drop in the sensing means is greater than a threshold of the value of the supply voltage of the microcontroller module, in which case the value of the voltage drop is sent to the information storage means of the processing module,

d) in the event that the voltage drop in the at least one sensing means is less than the threshold, disable the enabled measurement branch and repeat a) to c), enabling the following branch until the voltage drop in the sensing means is greater than the threshold of the value of the supply voltage.

Advantageously, as a result of the configuration and adaptation of the system, it is possible to take precise measurements in the entire operating range of a sensor wirelessly and to use a passive RFID system. An additional advantage is that to achieve said precise measurement in the entire operating range of the sensor, a standard wireless communication system is used, thereby increasing compatibility with any system on the market.

In one embodiment of the invention according to the first aspect of the invention, the at least one energy storage means comprises at least one capacitor or one inductance.

This embodiment affords the possibility of the RFID sensor being passive and not requiring any external energy source as a means for generating energy or a battery, with the subsequent versatility and cost reduction corresponding to the battery and to the maintenance thereof.

In another embodiment of the invention according to the first aspect of the invention, the at least one enabling module comprises at least several switching means.

Advantageously, this embodiment allows lowering the cost of the device because the switching means can be a transistor, a flip-flop or a switch. Such devices are highly reliable devices with simple maintenance and low energy consumption.

In one embodiment of the invention according to the first aspect of the invention, the at least one switching means comprises at least one transistor, preferably a MOSFET-type transistor.

Advantageously, this embodiment allows lowering the cost of the device because a transistor is an easy-to-install and easy-to-replace device with simple maintenance, low energy consumption and a long service life without modifying its electrical properties.

In one embodiment of the invention according to the first aspect of the invention, the at least one sensing means comprises at least one resistive-, capacitive- or inductive-type sensor, preferably a thermistor when the sensor is a resistive-type sensor.

In one embodiment of the invention, when the sensing means are capacitive or inductive sensing means, the measurement module additionally comprises charge switching means for the sensing means, and the at least one microcontroller module is adapted to enable the charge switching means for the sensing means and the switching means corresponding to the measurement branch with the lowest impedance.

Likewise, for the discharging phase of the sensing means, the at least one microcontroller module is adapted to disable the charge switching means for the sensing means and the switching means of the measurement branch with the lowest impedance.

Advantageously, this embodiment allows making the invention very versatile because the receiver can be used to measure any physical quantity according to the sensor connected to it.

In one embodiment of the invention according to the first aspect of the invention, the impedance comprised in the measurement branch comprises at least one resistive means, preferably at least one resistor.

In one embodiment of the invention according to the first aspect of the invention, the resistive means and the sensing means are configured in the form of a Wheatstone bridge.

Advantageously, these embodiments of measurement branches, with resistor configuration or resistors in the form of a Wheatstone bridge, allow using several measurement branch configurations to adapt to the different sensitivities and tolerances of the different sensors with a very low cost due to the low cost of said elements.

In a second aspect of the invention, the invention relates to a method for measuring a physical quantity wirelessly comprising the steps of:

- providing a system with a emitter and a passive receiver according to the first aspect of the invention,

- the emitter sending a measurement request to the receiver,
- the at least one means for extracting energy from the RF signal coming from the RFID emitter extracting energy, providing a supply voltage (Vdd),
- checking the value of the voltage (Vc) in the energy storage means by means of the monitoring module, and if the value of the voltage (Vc) in the at least one energy storage means is above a threshold (α), performing steps a) to f),

a) the monitoring module activating the microcontroller module through the enabling module,
b) enabling at least one branch of the measurement branches through the switching means,
c) taking at least one measurement of the voltage drop in the enabled measurement branch through the analog-to-digital conversion (ADC) means and determining the voltage drop in the sensing means,
d) determining if said at least one measurement of the voltage drop in the sensing means is greater than a threshold of the value of the supply voltage of the at least one microcontroller module, in which case the value of the voltage drop is sent to the at least one information storage means of the at least one processing module,
e) in the event that the voltage drop in the at least one sensing means is less than the threshold, disabling the measurement branch and repeating steps a) to d), enabling the following branch until the voltage drop in the at least one sensing means is greater than a threshold of the value of the supply voltage,
f) the processing module sending the obtained information saved in the processing module to the emitter,

- the emitter receiving the measurements taken by the receiver.

This second aspect advantageously allows taking the measurement of a physical quantity wirelessly using a passive sensor, obtaining the energy from the received signal to supply the different modules and means for taking said measurement with high precision in the entire operating range of the sensor, and sending the results to the receiver. This is a huge advancement with respect to the state of the art because solutions allowing said measurement to be taken wirelessly and passively with a high degree of precision in the entire operating range of the sensor are unknown.

In the same manner, the method of the second inventive aspect advantageously allows taking measurements of resistive, capacitive and inductive sensors, which benefits the versatility thereof.

In one embodiment of the invention according to the second aspect of the invention, when the sensor are capacitive- or inductive-type sensor, step a) of the monitoring module activating the microcontroller module through the enabling module comprises activating switching means for charging the capacitive or inductive sensor and activating the switching means corresponding to the measurement branch with the lowest impedance.

Likewise, in this same embodiment of the invention according to the second aspect of the invention, step b) of enabling at least one branch of the measurement branches through the switching means additionally comprises

- disabling said charge switching means for the capacitive or inductive sensor, and

- disabling the switching means of the measurement branch with the lowest impedance.

Advantageously, these embodiments additionally comprise expanding steps a) of activating and b) of enabling allow the use of any type of sensor or transducer which capacitive or inductive properties vary depending on a physical quantity. As a result of these embodiments, the user can implement the method of this invention with broad operating freedom, according to the user's needs.

In one embodiment of the invention according to the second aspect of the invention, when the value of the voltage in the at least one energy storage means is below a threshold (α), the method additionally comprises sending the value of the last measurement saved in the processing module to the emitter.

Advantageously, this embodiment allows saving energy and charging the energy storage means because the modules used for taking the measurement are only activated when the measurement is taken, and it further allows sending to the reader very approximate information about the measurement of the quantity to be measured.

In one embodiment of the invention according to the second aspect of the invention, the measurement request sent by the emitter involves

- taking a number of periodic measurements in said at least one measurement module, or
- taking a single measurement in said at least one measurement module, or
- taking a single measurement in said at least one measurement module and storing said measurement in the information storage means of the RFID receiver module.

Advantageously, this embodiment allows offering freedom of configuration and multiple options so that they can be used in multiple applications.

For example, if an environment where the temperature is a critical value is used, the sensor can periodically send the value of the temperature so the reader can take the appropriate actions.

Advantageously, as a result of the versatility of this embodiment it is possible to monitor several sensors with one and the same reader and thus obtain the information of each sensor associated individually with the unique identifier (ID) of each receiver, making it possible to know which sensor is sending what information at all times.

All the features and/or steps of the methods described in this specification (including the claims, description and drawings) can be combined in any combination, with the exception of combinations of such mutually exclusive features.

## BRIEF DESCRIPTION OF THE DRAWINGS

To complement the description made below and for the purpose of aiding to better understand the features of the invention according to a preferred practical embodiment thereof, a set of drawings is attached as an integral part of said description in which the following is depicted with an illustrative and non-limiting character:

Figure 1      This figure depicts the general operating process of the invention and the components thereof.

Figure 2      This figure shows the block diagram of the receiver module connected to the measurement module.

Figure 3      This figure shows the block diagram of a RFID tag or receiver.

Figure 4      This figure shows an embodiment of the architecture of the passive RFID receiver used for the measurement of physical quantities according to one embodiment.

Figure 4A      This figure shows one embodiment of the invention with a measurement branch with impedances.

Figure 4B      This Figure shows one embodiment of the invention with a measurement branch having a Wheatstone bridge configuration.

Figure 4C      This figure shows one embodiment of the invention with a measurement branch using capacitive means.

Figure 4D      This figure shows one embodiment of the invention with a measurement branch using inductive means.

Figure 5      This figure shows a graph comparing the results elaborated with the system and method of the invention with a conventional sensor.

Figure 6      This figure shows the flowchart of the method implemented in the invention.

## DETAILED DESCRIPTION OF THE INVENTION

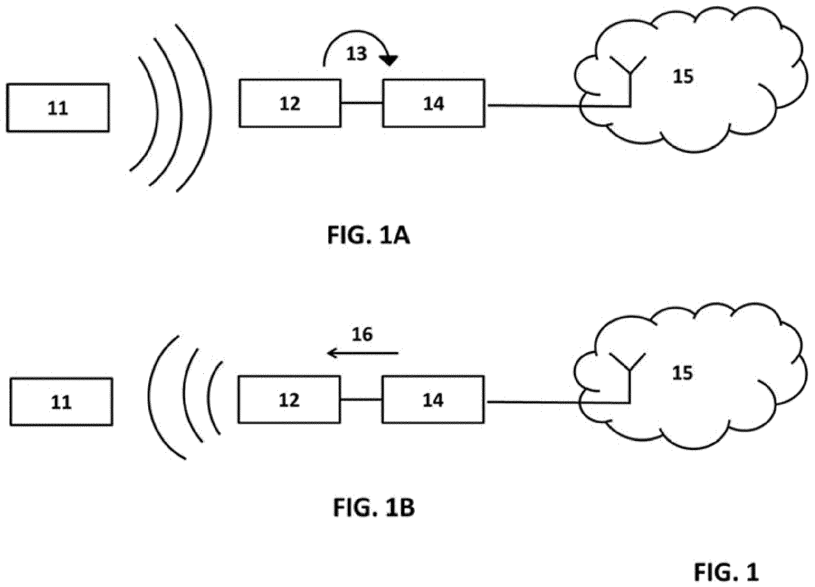

Figure 1 shows a depiction of the general scheme of the elements of the system of the invention for obtaining a physical quantity (15), specifically, an emitter (11), a receiver (12) and a measurement module (14).

Figure 1A shows the process of the emitter (11) sending a measurement request to the receiver (12), which in turn is responsible for processing (13) said request towards the measurement module (14).

The reverse process is shown in Figure 1B, i.e., the process (16) of transmitting the physical quantity (15) measured by the measurement module (14) to the receiver module (12).

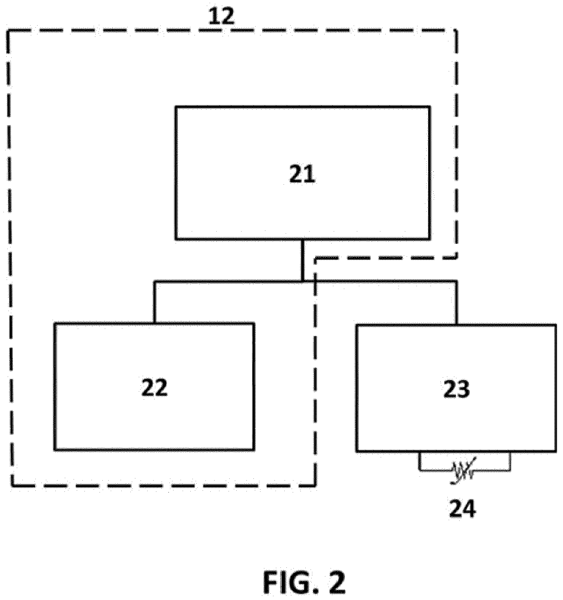

Figure 2 depicts the modules and main functions performed on the receiver module (12) side, i.e., the means (21) for extracting energy from the RF signal, the communication means (22) for communicating with the emitter module (11) and the measurement module (23).

The means (21) for extracting energy included in the passive RFID receiver module (12) extracts electromagnetic energy from the radio frequency (UHF) signal coming from the emitter module (11) in a conventional manner and transforms it into direct (DC) supply voltage (Vcc). Said direct supply voltage (Vcc) can supply the communication means (22) and/or the measurement module (23), depending on the type of request received. This decision is made by logic operation means included in the RFID receiver module (12).

As indicated, the communication means (22), also included in the passive RFID receiver module (12), receives direct voltage supply (Vcc) and are responsible for communication to and from the emitter module (11).

Given that both the extraction of energy by the means (21) for extracting energy and the wireless communications by the communication means (22) are performed using one and the same RFID tag, it is possible to use one and the same antenna for both functions.

Finally, the measurement module (23) also receives direct voltage supply (Vcc) and is responsible for the process of measuring the physical quantity to be measured.

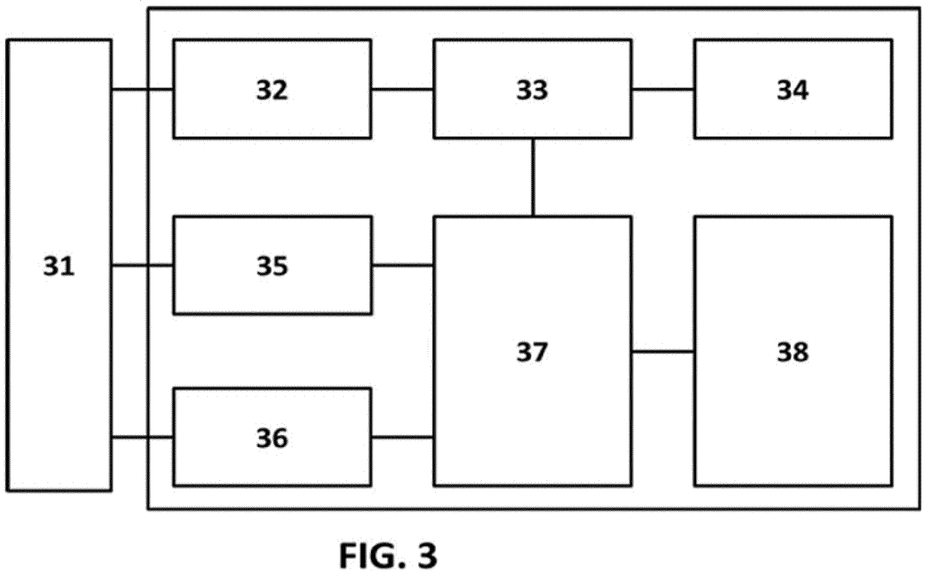

Figure 3 shows a block diagram of the RFID tag or receiver module (12) used in one embodiment of the system of the invention. The receiver module (12) comprises the following blocks:

- Antenna (31) used for receiving and transmitting RF signals,
- Voltage multiplier (32),
- Energy monitoring module (33),
- ASK (Amplitude Shift Keying) demodulator (35),
- Load modulator (36), and
- Digital processor (37) comprising the implemented RFID protocol.

In a particular embodiment, the receiver module (12) also comprises the following blocks:

- Block (34) for supplying energy to the exterior. This block facilitates direct voltage supply to other possible connectable elements or blocks, and
- Communication bridge (38). This bridge allows accessing through the RFID protocol other devices which are communicated with wired protocols.

In another possible embodiment, the communication bridge (38) is adapted to connect with a low consumption microcontroller with integrated ADC and digital inputs and outputs for controlling conditioning of a signal of a sensor coupled to the microcontroller.

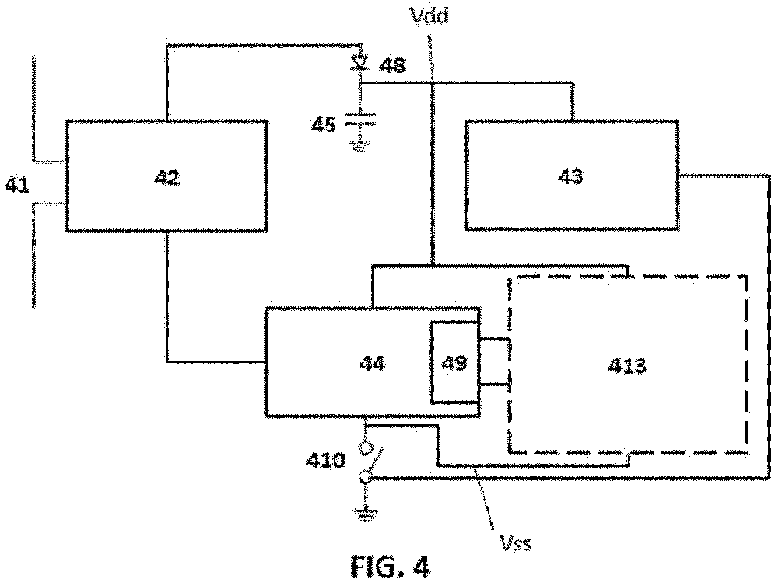

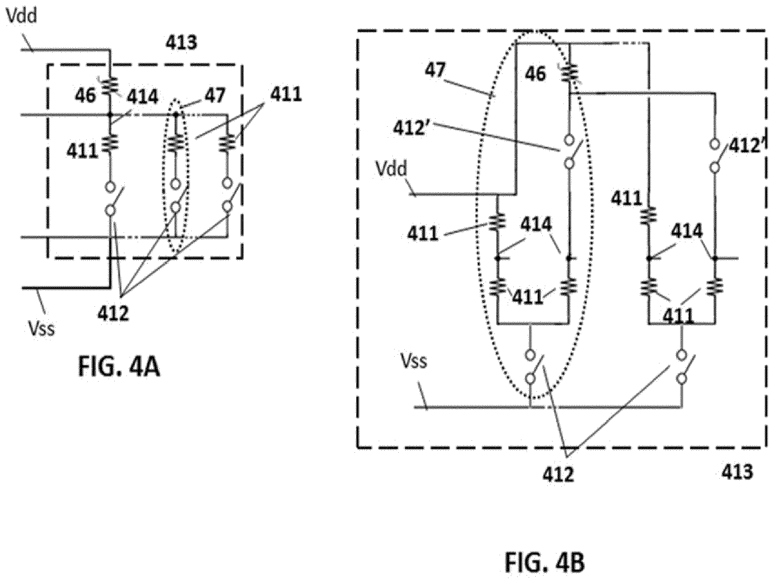

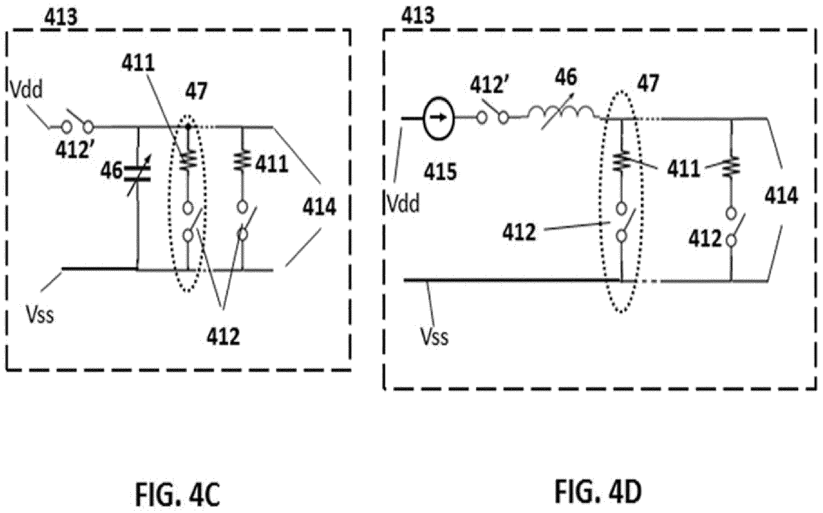

Figure 4 shows an embodiment of a measurement system for resistive transducers according to the invention.

The aforementioned modules are shown in this embodiment, i.e.,

- an antenna (41),
- a receiver module (42) for collecting energy and establishing and controlling communications,
- an energy monitoring module (43),
- microcontroller module (44) with an analog-to-digital ADC converter circuit (49),
- enabling means (410), and
- a measurement module (413).

The receiver module (42), or RFID tag, is responsible for collecting energy from the RFID signal and for establishing and controlling communications. Therefore, it is responsible for supplying (Vdd) the energy storage means (45), such that it has enough energy to support microcontroller module (44) and measurement module (413) current peaks. A diode (48) in series with the energy storage means is included in this embodiment to avoid feedback between the receiver module (42) and said storage means (45).

The receiver module (42) supplies the energy monitoring module (43), the purpose of which is proper energy management, i.e., keeping the measurement module (413) disconnected from the power source until enough energy has accumulated in the energy storage means (45). When the energy accumulated in the energy storage means (45) exceeds the minimum level required ($\alpha$), the energy monitoring module (43) connects the supply (Vss) of the measurement module (413) through the enabling means (410) with the purpose of taking the desired measurement.

Figures 4A, 4B, 4C, 4D show several embodiments of the measurement module (413) comprising:

- at least one sensing means (46) supplied by the processing module (37), and
- at least one measurement branch (47) connected to the sensing means (46), said at least one measurement branch (47) comprising at least one impedance (411) and at least one switching means (412),

Figure 4A shows an embodiment of the measurement module (413). In this case, said measurement module (413) comprises measurement branches (47) arranged in parallel, each branch (47) comprising resistive means (411) connected in series to switching means (412), said branches (47) being connected in series to sensing means (46) supplied by the energy storage means (45). In this embodiment, each resistive means (411) of the measurement branches (47) has a different value with respect to the resistive means (411) of the remaining measurement branches (47).

In turn, the switching means (412) are controlled independently by the microcontroller module (44), such that it is responsible for controlling and activating the different measurement branches (47) in a resistive bridge configuration to arrange in series one of the resistive means of a known value with the sensing means (46). In a particular embodiment, the sensing means (46) is a resistive transducer.

Therefore, by alternating current through the different measurement branches (47) and taking the voltage measurement at the midpoint (414) of the connection between the resistive means (411) and the switching means (412), a precise measurement of the instantaneous value of the sensing means or transducer (46) is determined. The voltage measurement at said midpoint (414) is taken by means of the analog-to-digital (ADC) converter circuit (49) of the microcontroller module (44).

*Measurement example 1: measuring with resistive sensors*

In a specific embodiment, the means and elements of the system for measuring a physical quantity are the following:

- Passive RFID receiver module (42): integrated Farsens ANDY100D circuit,
- Energy storage means (45): 50 $\mu$F capacitor,
- Energy monitoring module (43): Maxim MAX6427 voltage monitor,
- Microcontroller module (44): Texas Instruments MSP430F2XXX series microcontroller, with a 10-bit analog-to-digital converter (ADC) circuit (49),
- Measurement branches (47): each branch incorporates a resistor (411) an order of magnitude greater than the previous one: 100 $\Omega$, 1 k$\Omega$, 10 k$\Omega$, 100 k$\Omega$ and 1M$\Omega$,
- Transducer or sensing means (46): TH349G39GD thermistor the nominal resistance of which corresponding to the reference standard temperature thereof is 10 k$\Omega$.
- Optimal resolution threshold: 30% of the voltage drop with respect to the supply voltage (Vdd).

Therefore, the method for specific punctual measurement with said temperature transducer (46) at a temperature equal to the reference standard temperature thereof (25ºC), equivalent to a nominal resistor of 10 k$\Omega$, is as follows:

1. Activating the 1 M$\Omega$ branch.

    a. Total resistance of the branch is 1 M$\Omega$ + 10 k$\Omega$=1.01 M$\Omega$
    b. The current flowing through the branch is:

$$I=VDD/1.01 \text{ M}\Omega$$

    c. The voltage drop in the transducer is:

$$V= IxR=VDD \times 10 \text{ k}\Omega/1.01 \text{ M}\Omega=VDD \times 0.0099 -> 0.99\%$$

2. Taking the measurement with the ADC (49) and deactivating the branch.
3. Since 0.99% is less than 30%, taking the measurement with the following branch. The 100 k$\Omega$ branch is activated:

    a. The total resistance of the branch is 100 k$\Omega$ + 10 k$\Omega$=110 k$\Omega$
    b. The current flowing through the branch is:

$$I=VDD/110 \text{ k}\Omega$$

    c. The voltage drop in the transducer is:

$$V= IxR=VDD \times 10 \text{ k}\Omega/110 \text{ k}\Omega=VDD \times 0.0909 -> 9\%$$

4. Taking the measurement with the ADC (49) and deactivating the branch.
5. Since 9% is less than 30%, taking the measurement with the following branch. The 10 kΩ branch is activated:

a. The total resistance of the branch is 10 kΩ + 10 kΩ=20 kΩ
b. The current flowing through the branch is:

$$I=VDD/20\ k\Omega$$

c. The voltage drop in the transducer is:

$$V= IxR=VDD \times 10\ k\Omega/20\ k\Omega=VDD \times 0.5 \rightarrow 50\%$$

6. Taking the measurement with the ADC (49) and deactivating the branch.
7. Since 50% is greater than 30%, accepting the measurement as correct. The information returned to the RFID tag or receiver module (42) includes both the indication of the branch used for taking the measurement and the value returned by the ADC (49).

As can be seen, in this example the value of the measurement taken with the reference resistor (411) closest to the resistive value of the transducer (46) is returned. This offers higher resolution because the variation in the voltage measurement with respect to variations of the transducer (46) is less the further the values of the transducer (46) and reference resistor (411) from one another are.

The criterion for selecting in this example five branches (47) with a factor of x 10 between their resistors is to cover a wide range of resistive values (100 Ω-1 MΩ) with a sufficiently simple system (only five branches that can be controlled with a microcontroller (44) with few output and input ports).

Alternatively, in the case of measuring a transducer (46) which range of values is smaller, the system can be modified as follows:

1. Reducing the number of branches (47), which further entails a cost reduction.
2. Reducing the jump from the value of one measurement branch (47) to another. For example, instead of multiplying by ten every time, it is possible to multiply by five. In this case, the optimal threshold (U) value will vary due to the measurement range of the transducer. Given that there are more values of reference resistors (411) close to the value of the transducer (46), obtained resolution improves as there is always a reference resistor (411) very close to the real value of the transducer (46).

Figure 4B shows an embodiment of the measurement module (413). In this case, said measurement module (413) comprises measurement branches (47) in parallel configured in the form of a Wheatstone bridge. The Wheatstone bridge can comprise resistive means, capacitive means or inductive means.

The measurement branch (47) corresponding to each Wheatstone bridge is activated using the method implemented in this invention, where in step b) of enabling the measurement branches (47), the switches (412, 412') of each corresponding measurement branch are connected.

The differential voltage (414) in the Wheatstone bridge is calculated, as is conventional, with the following expression:

$$V_o = \left(\frac{Z_X}{Z + Z_X} - \frac{Z}{Z + Z}\right) V_i = \left(\frac{Z_X}{Z + Z_X} - \frac{1}{2}\right) V_i = \left(\frac{2Z_X - Z - Z_X}{Z + Z_X}\right) \frac{V_i}{2}$$

where:

- $V_o$ is the differential voltage (414) to be measured by the Wheatstone bridge,
- $V_i$ is the input voltage of the bridge (not identified in the drawings),
- $Z_x$ is the impedance of the sensor (46) which varies according to the measured quantity,
- Z is each of the impedances (411) of the bridge.

therefore the drop-out voltage or differential voltage (414) would be:

$$V_o = \frac{V_i}{2}\left(\frac{Z_X - Z}{Z + Z_X}\right)$$

As a result of this configuration, the impedances of each measurement branch, which can be of the inductive, capacitive or resistive type, can be chosen with great precision and greater sensitivity in the measurement can be obtained according to the needs of each application. The specific embodiment of Figure 4B shows a configuration with resistive elements (411) and a transducer (46) which is also resistive (jXx=0 $\rightarrow$ $Z_x$=$R_x$) (jX=0 $\rightarrow$ Z= R+ jX = R), therefore the differential drop-out voltage (414) would be:

$$V_o = \frac{V_i}{2}\left(\frac{R_X - R}{R + R_X}\right)$$

Figure 4C shows another embodiment of the measurement module (413) comprising a sensor (46) the capacitive properties of which vary according to the quantity to be measured, i.e., a capacitive sensor, and measurement branches (47) in parallel, each branch comprising a resistor (411). Each branch would be enabled according to step b) of the method implemented in the present invention through the switches (412, 412') shown in Figure 4C. In this embodiment, the resistor (411) of each measurement branch (47) has a different value with respect to the resistors (411) of the remaining measurement branches (47).

*Measurement example 2: measuring with capacitive sensors*

In this specific embodiment, the means and elements of the system for measuring a physical quantity (15) of measurement example 1 (measuring with resistive sensors) were used with the exception of the sensing means or transducer (46) used in this case being capacitive, i.e., the capacitive properties of which vary according to the quantity to be measured.
Therefore, the method for specific periodic measurement with said transducer (46) is as follows

1. The monitoring module (33, 43) activating the microcontroller module (44) through enabling module (410), and said microcontroller module (44) in turn activating the switching means (412') and the switching means (412) corresponding to the measurement branch (47) with the lowest impedance (411), until charging the sensor.
2. Once the capacitive sensor (46) is charged, the analog-to-digital converter (ADC) (49) taking a measurement $V_i$ of the voltage at points (414).
3. Enabling a measurement branch (47) through switching means (412), disabling the switching means (412') and disabling the switching means (412) corresponding to the measurement branch (47) with the lowest impedance (411).
4. Waiting for a specific time t.
5. The analog-to-digital converter (ADC) (49) taking another measurement $V_o$ of the voltage at points (414).
6. If $V_o$ is below a threshold U, the discharging was enough to obtain good resolution in the measurement; otherwise return to step 1 enabling a different branch of the measurement branch (47).

The value of the capacitance corresponding to the physical quantity measured by the sensor (46) is obtained from the following expression:

$$V_o = V_i e^{\frac{-t}{RC}} \rightarrow \frac{V_o}{V_i} = e^{\frac{-t}{RC}} \rightarrow \ln\frac{V_o}{V_i} = \frac{-t}{RC}$$

where:

- t is the predetermined wait time (step 4).
- $V_i$ is the output voltage measured in step 2.
- $V_o$ is the output voltage measured in step 5.
- R is the resistor (411) of the measurement branch (47) selected in step 3.
- C is the quantity to be obtained for which the value of the physical quantity (15) measured can be obtained.

$$C = \frac{-t}{R \ln \frac{V_o}{V_i}}$$

The value of the measured quantity is calculated in the processing module (37) based on the obtained value of C.

Figure 4D shows another embodiment of the measurement module (413) comprising a sensor (46) the inductive properties of which vary according to the quantity to be measured, i.e., an inductive sensor, and measurement branches (47) in parallel, each branch comprising a resistor (411). Each branch would be enabled according to step b) of the method implemented in the present invention through the switches (412, 412') shown in Figure 4D. In this embodiment, the resistor (411) of each measurement branch (47) has a different value with respect to the resistors (411) of the remaining measurement branches (47).

It must be observed that the current source (415) transforms the voltage Vdd to current to supply current to the inductive sensor, the device therefore being passive as well.

*Measurement example 3: measuring with inductive sensors.-*

In this specific embodiment, the means and elements of the system for measuring a physical quantity (15) of the measurement example 1 (measurement with resistive sensors) were once again used with the exception of the sensing means or transducer (46) used in this case being inductive, i.e., the inductive properties of which vary according to the quantity to be measured.

Therefore, the method for specific periodic measurement with said transducer (46) is as follows:

1. The monitoring module (33, 43) activating the microcontroller module (44) through enabling module (410), and said microcontroller module (44) in turn activating the switching means (412') and the switching means (412) corresponding to the measurement branch (47) with the lowest impedance (411), until charging the sensor.
2. Once the inductive sensor (46) is charged, the analog-to-digital converter (ADC) (49) taking a measurement $V_i$ of the voltage at points (414).
3. Enabling a measurement branch (47) through switching means (412), disabling the switching means (412') and disabling the switching means (412) corresponding to the measurement branch (47) with the lowest impedance (411).
4. Waiting for a specific time t.
5. The analog-to-digital converter (ADC) (49) taking another measurement $V_o$ of the voltage at points (414).
6. If $V_o$ is below a threshold U, the discharging was enough to obtain good resolution in the measurement; otherwise return to step 1 enabling a different branch of the measurement branch (47).

The value of the inductance corresponding to the physical quantity measured by the sensor (46) is obtained as follows:

$$V_o = V_i \left( 1 - e^{-t\frac{R}{L}} \right) \rightarrow \frac{V_o}{V_i} = 1 - e^{-t\frac{R}{L}} \rightarrow -t\frac{R}{L} = \ln \left( 1 - \frac{V_o}{V_i} \right)$$

where:

- t is the predetermined wait time (step 4).
- $V_i$ is the output voltage measured in step 2.
- $V_o$ is the output voltage measured in step 5.
- R is the resistor (411) of the measurement branch (47) selected in step 3.
- L is the quantity to be obtained for which the value of the physical quantity (15) measured can be obtained.

$$L = \frac{-t \cdot R}{\ln \left( 1 - \frac{V_o}{V_i} \right)}$$

The value of the measured quantity is calculated in the processing module (37) based on the obtained value of L.

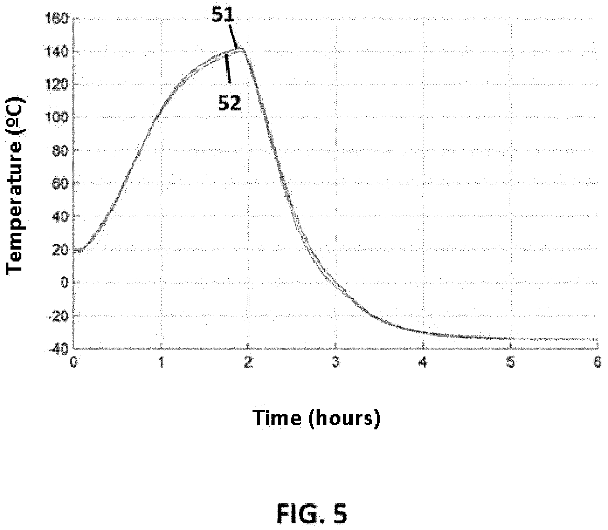

Figure 5 shows a comparison of the results (51) obtained with the system and method implemented according

EP 2 924 395 B1

to the invention with the measurements obtained (52) with a K-type thermocouple.

It can be seen that the degree of difference in the precision of the wireless system is similar to the thermocouple, overcoming all the problems indicated in the state of the art.

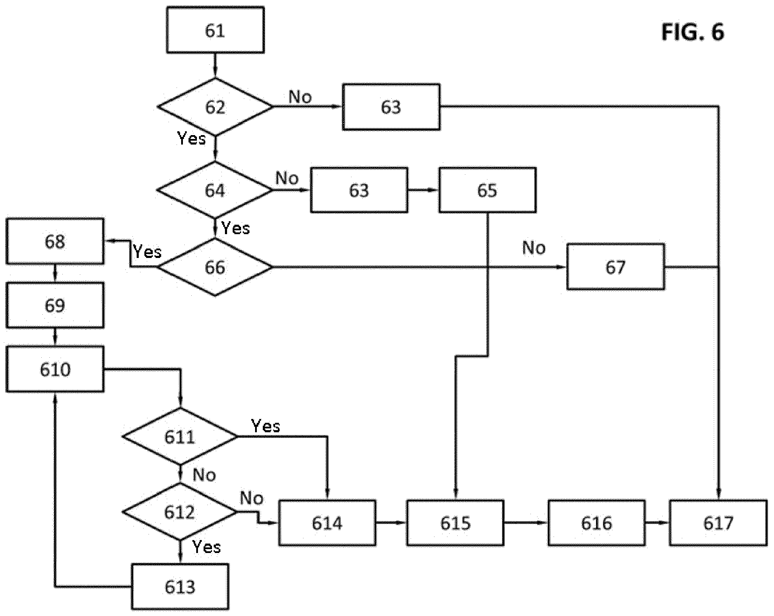

Figure 6 shows an embodiment of a flowchart according to the steps implemented by the method of the invention.

In the first step, a measurement request made by RFID emitter module is received (61) in the RFID receiver module (42).

Then it is determined (62) in the processing module (37) if the request is for said receiver module (42). If the request is not directed to said receiver, the energy is extracted (63) and the energy storage module (45) is recharged. Then the method ends (617).

If the request is addressed to the receiver module (42), the processing module checks (64), if a measurement request has been received.

*Case 1: an RFID receiver reading request is received*

In this case a request is received in which the RFID identification number has been requested or another record stored in the receiver module (42) has been requested. In this case, the energy is extracted (63) and the energy storage module (45) is recharged.

The requested information saved in the processing module (37) is subsequently obtained (65). Then the information is sent (615) to the emitter module (11); said information is subsequently received (616) in the emitter module (11) and the method ends (617).

*Case 2: a sensor measurement request is received*

In this case, a request for taking a measurement of a physical quantity (15) with the sensing means (46) is received. First, the voltage value of the energy storage means (45) is checked (66) by means of the monitoring module (43). If the energy storage means (45) have a voltage value below a threshold ($\alpha$), the method ends (617). Optionally, if the energy storage means (45) have a voltage value below said threshold ($\alpha$), an error message or the value of the last measurement saved is sent (67) to the emitter before the method ends (617).

In the case that the energy storage means (45) have a voltage value above said threshold ($\alpha$), the following steps are performed:

a) the monitoring module (43) activating (68) the microcontroller module (44) through enabling module (410),
b) enabling (69) at least one branch of the measurement branches (47) through the switching means (412)
c) taking (610) at least one measurement of the voltage drop in the midpoint (414) in the enabled measurement branch through the analog-to-digital conversion (ADC) means (49) and determining the voltage drop in the sensing means (611),
d) determining (611) if said at least one measurement of the voltage drop in the sensing means (46) is greater than a threshold (U) of the value of the supply voltage (Vdd) of the microcontroller module (44),
e) in the event that the voltage drop in the sensing means (46) is greater than the threshold (U), sending (614) the last measurement taken to the processing module and going to step h),
f) in the event that the voltage drop in the at least one sensing means (46) is less than the threshold (U), checking (612) if there are more measurement branches (47). If there are no more measurement branches (47), sending (614) the last measurement taken to the processing module,
g) if there are more measurement branches (47), disabling the measurement branch used and enabling the following measurement branch (613) and continuing in step c).
h) the processing module (37) sending (615) the obtained information saved in the processing module (37) to the emitter module (11),
i) the emitter module (11) receiving (616) the measurements taken by the receiver module (42).
j) the method ending (617).

**Claims**

**1.** A system for measuring a physical quantity (15) wirelessly, with a emitter and a passive receiver, comprising:

- on the emitter side, at least one RFID emitter (11), preferably emitting in the UHF band, with RF communication means for communicating with an RFID receiver,
- on the receiver side,

• at least one passive RFID receiver module (12, 42), preferably receiving in the UHF band, comprising,

- at least one processing module (37),
- at least one communication means (22, 31, 41) for communicating with the RFID emitter (11), and
- at least one means (21) for extracting energy from the RF signal coming from the RFID emitter (11), providing a supply voltage (Vdd),
- at least one information storage means, and
- at least one logic operation means,

• at least one energy storage means (45) connected to and supplied by the at least one processing module (37),
• at least one monitoring module (33, 43) for monitoring the energy stored in the at least one energy storage means (45),
• at least one microcontroller module (44), with analog-to-digital conversion (ADC) means (49), supplied and controlled by the at least one processing module (37),
• at least one measurement module (14, 23, 413) comprising,

- at least one sensing means (24, 46) supplied by the processing module (37), and
- at least one measurement branch (47) connected to the sensing means (24, 46), said at least one measurement branch (47) comprising at least one impedance (411) and at least one switching means (412),

• at least one enabling module (410) of the microcontroller module (44), said at least one enabling module (410) being controlled by the monitoring module (33, 43),

wherein

- the at least one monitoring module (33, 43) is adapted to maintain, by means of the at least one enabling module (410), the at least one measurement module (14, 23, 413) without power until the at least one storage means (45) reach a predetermined energy level ($\alpha$), and

- the at least one microcontroller module (44) is adapted to

a) enable at least one branch of the measurement branches (47) through the switching means (412),
b) take at least one measurement of the voltage drop in the enabled measurement branch (47) through the analog-to-digital conversion (ADC) means (49) and determine the voltage drop in the sensing means (46),
c) determine if said at least one measurement of the voltage drop in the sensing means (46) is greater than a threshold (U) of the value of the supply voltage (Vdd) of the at least one microcontroller module (44), in which case the value of the voltage drop is sent to the at least one information storage means of the at least one processing module (37),
d) in the event that the voltage drop in the at least one sensing means (24, 46) is less than the threshold (U), disable the measurement branch (47) and repeat a) to c), enabling the following branch (47) until the voltage drop in the at least one sensing means (24, 46) is greater than a threshold (U) of the value of the supply voltage (Vdd).

2. The system for measuring a physical quantity (15) wirelessly, with a emitter and a passive receiver, according to claim 1, wherein the at least one energy storage means (45) comprises at least one capacitor or one inductance.

3. The system for measuring a physical quantity (15) wirelessly, with a emitter and a passive receiver, according to any of the preceding claims, wherein the at least one enabling module (410) comprises at least several switching means.

4. The system for measuring a physical quantity (15) wirelessly, with a emitter and a passive receiver, according to any of the preceding claims, wherein the at least one switching means (412) comprise at least one transistor, preferably a MOSFET-type transistor.

5. The system for measuring a physical quantity (15) wirelessly, with a emitter and a passive receiver, according to any of the preceding claims, wherein the at least one sensing means (24, 46) comprises at least one resistive-, capacitive- or inductive-type sensor, preferably a thermistor when the sensor is a resistive-type sensor.

6. The system for measuring a physical quantity (15) wirelessly, with a emitter and a passive receiver, according to claim 5, wherein when the sensing means are capacitive or inductive,
the measurement module (413) additionally comprises charge switching means (412') for the sensing means (46), and
the at least one microcontroller module (44) is adapted to enable

- the charge switching means (412') for the sensing means (46), and
- the switching means (412) corresponding to the measurement branch (47) with the lowest impedance (411).

7. The system for measuring a physical quantity (15) wirelessly, with a emitter and a passive receiver, according to claim 6, wherein the at least one microcontroller module (44) is adapted to disable

- the charge switching means (412') of the sensing means (46), and
- the switching means (412) of the measurement branch (47) with the lowest impedance (411).

8. The system for measuring a physical quantity (15) wirelessly, with a emitter and a passive receiver, according to any of the preceding claims, wherein the impedance (411) comprised in the measurement branch (47) comprises at least one resistive means (411), preferably at least one resistor.

9. The system for measuring a physical quantity (15) wirelessly, with a emitter and a passive receiver, according to claim 8, wherein the resistive means (411) and the sensing means (46) are configured in the form of a Wheatstone bridge.

10. A method for measuring a physical quantity (15) wirelessly comprising the steps of:

- providing a system with a emitter (11) and a passive receiver (12, 42) according to any one of claims 1 to 9,
- the emitter (11) sending a measurement request to the receiver (12, 42),
- the at least one means (21) for extracting energy from the RF signal coming from the RFID emitter extracting energy (63), providing a supply voltage (Vdd),
- checking the value of the voltage (Vc) in the energy storage means (45) by means of the monitoring module (33, 43), and if the value of the voltage (Vc) in the at least one energy storage means (45) is above a threshold ($\alpha$), performing steps a) to f),

a) the monitoring module (33, 43) activating (68) the microcontroller module (44) through the enabling module (410),
b) enabling (69) at least one branch of the measurement branches (47) through the switching means (412)
c) taking (610) at least one measurement of the voltage drop in the enabled measurement branch (47) through the analog-to-digital conversion (ADC) means (49) and determining the voltage drop (611) in the sensing means (46),
d) determining (611) if said at least one measurement of the voltage drop in the sensing means (46) is greater than a threshold (U) of the value of the supply voltage (Vdd) of the at least one microcontroller module (44), in which case the value of the voltage drop is sent (614) to the at least one information storage means of the at least one processing module (37),
e) in the case of that the voltage drop in the at least one sensing means (24, 46) is less than the threshold (U), disabling the measurement branch and repeating steps a) to d), enabling the following branch until the voltage drop in the at least one sensing means (24, 46) is greater than a threshold (U) of the value of the supply voltage (Vdd),
f) the processing module (37) sending (615) the obtained information saved in the processing module (37) to the emitter (11),

- the emitter (11) receiving (616) the measurements taken by the receiver (12, 42).

11. The method for measuring a physical quantity (15) wirelessly according to claim 10, wherein when the sensing means (46) are capacitive- or inductive-type sensing means (46), step a) of the monitoring module (33, 43) activating (68) the microcontroller module (44) through the enabling module (410) comprises the microcontroller module (44) activating,

- the charge switching means (412') for the sensing means (46), and
- the switching means (412) corresponding to the measurement branch (47) with the lowest impedance (411).

12. The method for measuring a physical quantity (15) wirelessly according to claim 11, wherein in the case of step b) enabling (69) at least one branch of the measurement branches (47) through the switching means (412) additionally comprises

- disabling the charge switching means (412') for the capacitive or inductive sensor (46), and
- disabling the switching means (412) of the measurement branch (47) with the lowest impedance (411).

13. The method for measuring a physical quantity (15) wirelessly according to claims 10 to 12, wherein when the value of the voltage (Vc) in the at least one energy storage means (45) is below a threshold ($\alpha$), the method additionally comprises sending the value of the last measurement (616) saved in the processing module (37) to the emitter.

14. The method for measuring a physical quantity (15) wirelessly according to any of claims 10 to 13, wherein the measurement request sent by the emitter involves

- taking (610) a number of periodic measurements in said at least one measurement module (14, 23, 413), or
- taking a single measurement (610) in said at least one measurement module (14, 23, 413), or
- taking a single measurement (610) in said at least one measurement module (14, 23, 413) and storing said measurement in the information storage means of the RFID receiver module.


**Patentansprüche**

1. System zum drahtlosen Messen einer physikalischen Größe (15) mit einem Sender und einem passiven Empfänger, das folgendes umfasst:

- eine Senderseite, mindestens einen RFID-Sender (11), der vorzugsweise im UHF-Band sendet, mit RF-Kommunikationsmitteln zum Kommunizieren mit einem RFID-Empfänger,
- eine Empfängerseite

• mindestens eine passives RFID-Empfängermodul (12, 42), das vorzugsweise im UGHF-Band empfängt, folgendes umfassend,

- mindestens ein Verarbeitungsmodul (37)
- mindestens ein Kommunikationsmittel (22, 31, 41) zum Kommunizieren mit dem RFID-Sender (11) und
- mindestens eine Mittel (21) zum Extrahieren von Energie aus dem RF-Signal, das aus dem RFID-Sender (11) kommt, Bereitstellen einer Netzspannung (Vdd),
- mindestens ein Informationsspeichermittel, und
- mindestens ein logisches Verknüpfungsmittel,

• mindestens ein Energiespeichermittel (45), das mit mindestens einem Verarbeitungsmodul (37) verbunden ist daraus gespeist wird;
• mindestens ein Überwachungsmodul (33, 43) zur Überwachung der in dem mindestens einem Energiespeichermittel (45) gespeicherten Energie,
• mindestens Mikrocontrollermodul (44) mit Analog-zu-Digital-Umwandlungs-(ADC)-Mitteln (49), die von dem mindestens einem Verarbeitungsmodul (37) gespeist und gesteuert werden,
• mindestens ein Messmodul (14, 23, 413), folgendes umfassend,

- mindestens ein Sensormittel (24, 46), das von dem Verarbeitungsmodul (37) gespeist wird, und
- mindestens einen Messzweig (47), der mit den Sensormitteln (24, 46) verbunden ist, wobei der mindestens eine Messzweig (47) mindestens eine Impedanz (411) und mindestens ein Schaltmittel (412) umfasst,

• mindestens ein Aktivierungsmodul (410) des Mikrocontrollermoduls (44), wobei das mindestens eine Aktivierungsmodul (410) durch das Überwachungsmodul (33, 43) gesteuert wird,

wobei

- das mindestens ein Überwachungsmodul (33, 43) dazu ausgelegt ist, mittels des mindestens einen Aktivierungsmoduls (410) das mindestens eine Messmodul (14, 24, 413) ohne Strom zu halten, bis das mindestens eine Speichermittel (45) ein vorbestimmtes Energieniveau ($\alpha$) erreicht, und
- mindestens ein Mikrocontrollermodul (44) ausgelegt ist, um

a) mindestens einen Zweig der Messzweige (47) über das Schaltmittel (412) zu aktivieren,
b) mindestens eine Messung des Spannungsabfalls in dem aktivierten Messzweig (47) durch das Analog-zu-Digital-Umwandlungs-(ADC)-Mittel (49) vorzunehmen und den Spannungsabfall in dem Sensormittel (46) zu bestimmen,
c) zu bestimmen, ob die mindestens eine Messung des Spannungsabfalls in dem Sensormittel (46) größer ist als ein Schwellenwert (U) des Wertes der Netzspannung (Vdd) des mindestens einen Mikrocontrollermoduls (44), in welchem Fall der Wert des Spannungsabfalls an das mindestens eine Informationsspeichermittel des mindestens einen Verarbeitungsmoduls (37) gesendet wird,
d) in dem Falle, dass der Spannungsabfall in dem mindestens einen Sensormittel (24, 64) geringer ist als der Schwellenwert (U), den Messzweig (47) zu deaktivieren und a) bis c) zu wiederholen, den folgenden Zweig (47) zu aktivieren, bis der Spannungsabfall in dem mindestens einem Sensormittel (24, 46) größer ist als ein Schwellenwert (U) des Wertes der Netzspannung (Vdd).

2. System zum drahtlosen Messen einer physikalischen Größe (15) mit einem Sender und einem passiven Empfänger nach Anspruch 1, wobei das mindestens eine Energiespeichermittel (45) mindestens einen Kondensator oder eine Induktanz umfasst.

3. System zum drahtlosen Messen einer physikalischen Größe (15) mit einem Sender und einem passiven Empfänger nach einem der vorangehenden Ansprüche, wobei das mindestens eine Aktivierungsmodel (410) mindestens mehrere Schaltmittel umfasst.

4. System zum drahtlosen Messen einer physikalischen Größe (15) mit einem Sender und einem passiven Empfänger nach einem der vorangehenden Ansprüche, wobei das mindestens eine Schaltmittel (412) mindestens einen Transistor, vorzugsweise einen MOSFET-Transistor, umfasst.

5. System zum drahtlosen Messen einer physikalischen Größe (15) mit einem Sender und einem passiven Empfänger nach einem der vorangehenden Ansprüche, wobei das mindestens eine Sensormittel (24, 46) mindestens einen resistiven, kapazitiven oder induktiven Sensor, vorzugsweise einen Thermistor, wenn der Sensor ein resistiver Sensor ist, umfasst.

6. System zum drahtlosen Messen einer physikalischen Größe (15) mit einem Sender und einem passiven Empfänger nach Anspruch 5, wobei, wenn die Sensormittel kapazitiv oder induktiv sind,
das Messmodul (413) zusätzlich Ladungsschaltmittel (412') für das Sensormittel (46) umfasst, und
das mindestens eine Mikrocontrollermodul (44) dazu ausgelegt ist, folgendes zu aktivieren:

- das Ladungsschaltmittel (412'), für das Sensormittel (46), und
- das Schaltmittel (412) entsprechend dem Messzweig (47) mit der niedrigsten Impedanz (411).

7. System zum drahtlosen Messen einer physikalischen Größe (15) mit einem Sender und einem passiven Empfänger nach Anspruch 6, wobei das mindestens eine Mikrocontrollermodul (44) dazu ausgelegt ist, folgendes zu deaktivieren:

- das Ladungsschaltmittel (412') des Sensormittels (46), und
- das Schaltmittel (412) des Messzweiges (47) mit der geringsten Impedanz (411).

8. System zum drahtlosen Messen einer physikalischen Größe (15) mit einem Sender und einem passiven Empfänger nach einem der vorangehenden Ansprüche, wobei die Impedanz (411), die in dem Messzweig (47) umfasst ist, mindestens ein resistives Mittel (411) vorzugsweise mindestens einen Widerstand umfasst.

9. System zum drahtlosen Messen einer physikalischen Größe (15) mit einem Sender und einem passiven Empfänger nach Anspruch 8, wobei das resistive Mittel (411) und das Sensormittel (46) in der Form einer Wheatstone-Brücke konfiguriert sind.

10. Verfahren zum drahtlosen Messen einer physikalischen Größe, umfassend die folgenden Schritte:

- bereitstellen eines Systems mit einem Sender (11) und einen passiven Empfänger (12, 42) nach einem der Ansprüche 1 bis 9,
- der Sender (11) sendet eine Messanforderung an den Empfänger (12, 42),
- extrahieren (63) Energie mittels des mindestens einen Mittels (21) zum Extrahieren von Energie aus dem RF-Signal, das aus der RFID-Sender kommt, liefert eine Netzspannung (Vdd),
- prüfen des Wertes der Spannung (Vc) in dem Energiespeichermittel (45) mittels des Überwachungsmoduls (33, 43), und wenn der Wert der Spannung (Vc) in dem mindestens einen Energiespeichermittel (45) über einem Schwellenwert ($\alpha$) liegt, durchfiihren der Schritte a) bis f),

  a) das Überwachungsmodul (33, 43) aktiviert (68) das Mikrocontrollermodul (44) über das Aktivierungsmodul (410)
  b) aktivieren (69) mindestens eines Zweigs der Messzweige (47) über die die Schaltmittel (412)
  c) vornehmen (610) mindestens einer Messung des Spannungsabfalls in den aktivierten Messzweig (47) durch das Analog-zu-Digital-Umwandlungs-(ADC)-Mittel (49) und bestimmen des Spannungsabfalls (611) in dem Sensormittel (46),
  d) bestimmen (611), ob die mindestens eine Messung des Spannungsabfalls in dem Sensormittel (46) größer ist als ein Schwellenwert (U) der Netzspannung (Vdd) des mindestens einen Mikrocontrollermoduls (44), in welchem Fall der Wert des Spannungsabfalls zu dem mindestens einem Informationsspeichermittel des mindestens einem Verarbeitungsmodels (37) gesendet wird (614),
  e) im Falle, dass der Spannungsabfall in dem mindestens einen Sensormittel (24, 46) geringer ist als der Spannungsabfall (U), deaktivieren des Messzweigs und Wiederholen der Schritte a) bis d), aktivieren des folgenden Zweigs, bis der Spannungsabfall in dem mindestens einen Sensormittel (24, 46) größer ist als ein Schwellenwert (U) des Wertes der Netzspannung (Vdd),
  f) das Verarbeitungsmodul (37) sendet (615) die erhaltenen Informationen, die in dem Verarbeitungsmodul (37) gespeichert sind, an den Sender (11),

- der Sender (11) empfängt (616) die vom Empfänger (12, 42) vorgenommenen Messungen.

11. Verfahren zum drahtlosen Messen einer physikalischen Größe (15) nach Anspruch 10, wobei, wenn die Sensormittel (46) kapazitive oder induktive Sensormittel (46) sind, der Schritt a) der Überwachungsmodul (33, 43)-Aktivierung (68) des Mikrocontrollermoduls (44) durch das Aktivierungsmodul (410) umfasst, dass das Mikrocontrollermodul (44) folgendes aktiviert,

- das Ladungsschaltmittel (412'), für das Sensormittel (46), und
- das Schaltmittel (412) entsprechend dem Messzweig (47) mit der geringsten Impedanz (411).

12. Verfahren zum drahtlosen Messen einer physikalischen Größe nach Anspruch 11, wobei im Falle von Schritt b) das Aktivieren (69) von mindestens einem Zweig der Messzweige (47) durch das Schaltmittel (412) zusätzlich folgendes umfasst

- deaktivieren des Ladungsschaltmittels (412') für den kapazitiven oder induktiven Sensor (46) und
- deaktivieren des Schaltmittels (412) des Messzweigs (47) mit der geringsten Impedanz (411).

13. Verfahren zum drahtlosen Messen einer physikalischen Größe (15) nach den Ansprüchen 10 bis 12, wobei, wenn der Wert der Spannung (Vc) in dem mindestens einem Energiespeichermittel (45) unter einem Schwellenwert ($\alpha$) liegt, das Verfahren zusätzlich das Senden des Wertes der letzten in dem Verarbeitungsmodul (37) gespeicherten Messung (616) an den Sender umfasst.

14. Verfahren zum drahtlosen Messen einer physikalischen Größe (15) nach einem der Ansprüche 10 bis 13, wobei die von dem Sender gesendete Messanforderung folgendes umfasst:

- vornehmen (610) einer Anzahl von regelmäßigen Messungen in dem mindestens einen Messmodul (14, 23, 413) oder
- vornehmen der einzigen Messung (610) in dem mindestens einen Messmodul (14, 23, 413), oder

- vornehmen einer einzigen Messung (610) in dem mindestens einen Messmodul (14, 23, 413) und Speichern der Messung in dem Informationsspeichermittel des RFID-Empfängermoduls.

**Revendications**

1. Système de mesure d'une quantité physique (15) sans fil, avec un émetteur et un récepteur passif, comprenant :

   - du côté de l'émetteur, au moins un émetteur RFID (11), émettant de préférence dans la bande des UHF, avec un moyen de communication par fréquence radio pour communiquer avec un récepteur RFID,
   - du côté du récepteur,
   au moins un module récepteur RFID passif (12, 42), recevant de préférence dans la bande des UHF, comprenant :
   - au moins un module de traitement (37),
   - au moins un moyen de communication (22, 31, 41) pour communiquer avec l'émetteur RFID (11), et
   - au moins un moyen (21) d'extraire de l'énergie du signal de fréquence radio provenant de l'émetteur RFID (11), fournissant une tension d'alimentation (Vdd),
   - au moins un moyen de stockage de l'information, et
   - au moins un circuit logique,
   au moins un moyen pour stocker l'énergie (45) connecté à et alimenté par le au moins un module de traitement (37),
   au moins un module de surveillance (33, 43) pour surveiller l'énergie stockée dans le au moins un moyen pour stocker l'énergie (45),
   au moins un module micro-contrôleur (44), avec un moyen de conversion (49) de l'analogique au numérique (ADC), alimenté et contrôlé par le au moins un module de traitement (37),
   au moins un module de mesure (14, 23, 413) comprenant :
   - au moins un moyen de détection (24, 46) alimenté par le module de traitement (37), et
   - au moins une branche de mesure (47) connectée au moyen de détection (24, 46), le dit au moins une branche de mesure (47) comprenant au moins une impédance (411) et au moins un interrupteur (412),
   au moins un module d'habilitation (410) du module micro-contrôleur (44), le dit au moins un module d'habilitation (410) étant contrôlé par le module de surveillance (33, 43),

   dans lequel

   - le au moins un module de surveillance (33, 43) est adapté pour maintenir, à l'aide du au moins un module d'habilitation (410), le au moins un module de mesure (14, 23, 413) sans courant jusqu'à ce que le au moins un moyen de stockage (45) atteigne un niveau d'énergie ($\alpha$) prédéterminé, et
   - le au moins un module micro-contrôleur (44) est adapté à:

      a) habiliter au moins une branche des branches de mesure (47) à travers l'interrupteur (412),
      b) prendre au moins une mesure de la baisse de tension dans la branche de mesure habilitée (47) à travers le moyen de conversion (49) de analogique à numérique (ADC) et déterminer la baisse de tension dans le moyen de détection (46),
      c) déterminer si la dite au moins une mesure de la baisse de tension dans le moyen de détection (46) est supérieure à un seuil (U) de la valeur de la tension d'alimentation (Vdd) du dit au moins un module micro-contrôleur (44), auquel cas la valeur de la baisse de tension est envoyée au dit au moins un moyen pour stocker l'information du au moins un module de traitement (37),
      d) dans le cas où la baisse de tension dans le au moins un moyen de détection (24, 46) est inférieure au seuil (U), désactive la branche de mesure (47) et répète a) à c), habilitant la branche suivante (47) jusqu'à ce que la baisse de tension dans le au moins un moyen de détection (24, 46) soit supérieure à un seuil (U) de la valeur de la tension d'alimentation (Vdd).

2. Système sans fil de mesure d'une quantité physique (15), avec un émetteur et un récepteur passif, selon la revendication 1, dans lequel le au moins un moyen de stockage de l'énergie (45) comprend au moins une capacité ou une inductance.

3. Système sans fil de mesure d'une quantité physique (15), avec un émetteur et un récepteur passif, selon l'une quelconque des revendications précédentes, dans lequel le au moins un module d'habilitation (410) comprend au moins plusieurs interrupteurs.

4. Système sans fil de mesure d'une quantité physique (15), avec un émetteur et un récepteur passif, selon l'une quelconque des revendications précédentes, dans lequel le au moins un interrupteur (412) comprend au moins un transistor, de préférence un transistor de type MOSFET.

5. Système sans fil de mesure d'une quantité physique (15), avec un émetteur et un récepteur passif, selon l'une quelconque des revendications précédentes, dans lequel le au moins un moyen de détection (24, 46) comprend au moins un détecteur de type résistance, condensateur ou inducteur, de préférence un thermistor quand le détecteur est un détecteur de type résistance.

6. Système sans fil de mesure d'une quantité physique (15), avec un émetteur et un récepteur passif, selon la revendication 5, dans lequel le moyen de détection est un condensateur ou un inducteur,
le module de mesure (413) comprenant en outre un interrupteur de charge (412') pour le moyen de détection (46), et
le au moins un module micro-contrôleur (44) est adapté à habiliter

- l'interrupteur de charge (412') pour le moyen de détection (46), et
- l'interrupteur (412) correspondant à la branche de mesure (47) avec l'impédance la plus faible (411).

7. Système sans fil de mesure d'une quantité physique (15), avec un émetteur et un récepteur passif, selon la revendication 6, dans lequel le au moins un module micro-contrôleur (44) est adapté à désactiver

- l'interrupteur de charge (412') du moyen de détection (46), et
- l'interrupteur (412) de la branche de mesure (47) avec l'impédance la plus faible (411).

8. Système sans fil de mesure d'une quantité physique (15), avec un émetteur et un récepteur passif, selon l'une quelconque des revendications précédentes, dans lequel l'impédance (411) comprise dans la branche de mesure (47) comprend au moins un moyen de résistance (411), de préférence au moins une résistance.

9. Système sans fil de mesure d'une quantité physique (15), avec un émetteur et un récepteur passif, selon la revendication 8, dans lequel le moyen de résistance (411) et le moyen de détection (46) sont configurés sous la forme d'un pont de Wheatstone.

10. Méthode de mesure sans fil d'une quantité physique (15) comprenant les étapes de :

- prévoir un système avec un émetteur (11) et un récepteur passif (12, 42) selon l'une quelconque des revendications 1 à 9,
- l'émetteur (11) envoyant une demande de mesure au récepteur (12, 42),
- le au moins un moyen (21) pour extraire de l'énergie du signal radio venant de l'émetteur RFID extrait de l'énergie (63), fournissant une tension d'alimentation (Vdd) ,
- vérifier la valeur de la tension (Vc) dans le moyen de stocker de l'énergie (45) au moyen du module de surveillance (33, 43), et si la valeur de la tension (Vc) dans le au moins un moyen pour stocker l'énergie (45) est supérieure à un seuil ($\alpha$), réaliser les étapes a) à f),

a) le module de surveillance (33, 43) activant (68) le module micro-contrôleur (44) à travers le module d'habilitation (410),
b) habilitation (69) d'au moins une branche des branches de mesure (47) à travers l'interrupteur (412),
c) prendre (610) au moins une mesure de la baisse de tension dans la branche de mesure habilitée (47) à travers le moyen de conversion de l'analogique au numérique (ADC) (49) et déterminer la baisse de tension (611) dans le moyen de détection (46),
d) déterminer (611) si la dite au moins une mesure de la baisse de tension dans le moyen de détection (46) est supérieure à un seuil (U) de la valeur de la tension d'alimentation (Vdd) du au moins un module micro-contrôleur (44), auquel cas la valeur de la baisse de tension est envoyée (614) à au moins un moyen de stockage de l'information du au moins un module de traitement (37),
e) dans le cas où la baisse de tension dans le au moins un moyen de détection (24, 46) est inférieure au seuil (U), désactiver la branche de mesure et répéter les étapes a) à d), habilitant le branchement suivant jusqu'à ce que la baisse de tension dans le au moins un moyen de détection (24, 46) soit supérieure à un seuil (U) de la valeur de la tension d'alimentation (Vdd),

f) le module de traitement (37) envoyant (615) l'information obtenue sauvegardée dans le module de traitement (37) vers l'émetteur (11),

- l'émetteur (11) recevant (616) les masures prises par le récepteur (12, 42).

**11.** Méthode pour mesurer sans fil une quantité physique (15) selon la revendication 10, dans laquelle le moyen de détection (46) est un moyen de détection (46) de type condensateur ou inducteur, l'étape a) du module de surveillance (33, 43) activant (68) le module de micro-contrôle (44) à travers le module d'habilitation (410) comprenant le module micro-contrôleur (44) activant,

- l'interrupteur de charge (412') pour le moyen de détection (46), et
- l'interrupteur (412) correspondant à la branche de mesure (47) avec l'impédance la plus faible (411).

**12.** Méthode pour mesurer sans fil une quantité physique (15) selon la revendication 11, dans laquelle dans le cas de l'étape b) habilitant (69) au moins une branche des branches de mesure (47) à travers l'interrupteur (412) qui comprend en outre

- la désactivation de l'interrupteur de charge (412') pour le détecteur de type condensateur ou inducteur (46), et
- la désactivation de l'interrupteur (412) de la branche de mesure (47) avec l'impédance la plus faible (411).

**13.** Méthode pour mesurer sans fil une quantité physique (15) selon les revendications 10 à 12, dans laquelle la valeur de la tension (Vc) dans le au moins un moyen de stockage de l'énergie (45) est inférieure à un seuil ($\alpha$), la méthode comprenant en outre l'envoi de la valeur de la dernière mesure (616) sauvegardée dans le module de traitement (37) à l'émetteur.

**14.** Méthode pour mesurer sans fil une quantité physique (15) selon les revendications 10 à 13, dans laquelle la demande de mesure envoyée par l'émetteur implique :

- la prise (610) d'un nombre de mesures périodiques dans le dit au moins un module de mesure (14, 23, 413), ou
- la prise d'une seule mesure (610) dans le dit au moins un module de mesure (14, 23, 413), ou
- la prise d'une seule mesure (610) dans le dit au moins un module de mesure (14, 23, 413) et stocker la dite mesure dans le moyen de stockage de l'information du module récepteur RFID.

**FIG. 1A**

**FIG. 1B**

**FIG. 1**

**FIG. 2**

EP 2 924 395 B1

FIG. 3

FIG. 4

FIG. 4B

FIG. 4A

FIG. 4C

FIG. 4D

FIG. 5

EP 2 924 395 B1

**FIG. 6**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20130176115 A1
- US 20110043339 A1
- EP 0496147 A1